# EUROPÄISCHE PATENTSCHRIFT

(11) **EP 1 543 920 B1**
(45) Veröffentlichungstag und Bekanntmachung des Hinweises auf die Patenterteilung: **05.07.2006**
(21) Anmeldenummer: 04027622.2
(22) Anmeldetag: 20.11.2004
(51) Int. Cl.: B23Q 17/20, G01B 5/20, B23Q 3/18

(54) **Verfahren und Vorrichtung zur Prüfung einer kegeligen Fläche von ringförmigen Werkstücken**
Method and device for checking a tapered surface of ringshaped workpieces
Méthode et dispositif pour le contrôle d'une surface conique d'une pièce en forme d'anneau

(30) Priorität: 17.12.2003 DE 10359186
(43) Veröffentlichungstag der Anmeldung: 22.06.2005
(73) Patentinhaber: ZF FRIEDRICHSHAFEN AG, 88038 Friedrichshafen (DE)
(72) Erfinder: Schilling, Reinhold, 88046 Friedrichshafen (DE)

(56) Entgegenhaltungen:
- US-A- 4 209 206
- US-A- 4 393 698
- US-A- 4 977 682
- US-A- 5 152 166

## Beschreibung

Die Erfindung betrifft eine Vorrichtung zur Prüfung des Rundlaufs von ringförmigen Werkstücken mit einem Innenkegel und/oder Außenkegel gemäß dem Oberbegriff des Patentanspruchs 1 (siehe, z. B., US-5152 166-A). Die Erfindung betrifft außerdem ein Verfahren zum Betreiben einer derartigen Vorrichtung gemäß dem Oberbegriff des Anspruchs 14.

Vorrichtungen und Verfahren zum Prüfen beziehungsweise Vermessen von Werkstücken, insbesondere ringförmigen Werkstücken, mit Hilfe von geeigneten Messeinrichtungen sind an sich bekannt. Diese Messeinrichtungen verfügen in der Regel über einen komplizierten und kostenintensiven Portalausleger, um das Messmittel an den Prüfling heranführen zu können. Zudem sind diese üblicherweise Bestandteil einer gesonderten Vorrichtung, die ihrerseits einen Grundrahmen mit einer Werkstückaufnahme in Form eines Rundtisches mit entsprechenden Arretiervorrichtungen für den Prüfling aufweist.

In der Praxis hat sich der hohe Zeit- und demgemäss Kostenaufwand zur Ausrichtung des Prüflings, wie beispielsweise eines Synchronringes für ein Getriebe, auf dem Rundtisch als nachteilig erwiesen, bevor überhaupt gemessen und ein Rundheitsdiagramm geschrieben werden kann.

Vor diesem Hintergrund ist es daher Aufgabe der Erfindung, eine Vorrichtung zur Prüfung des Rundlaufs von ringförmigen Werkstücken mit einem Innenkegel und/oder Außenkegel zu schaffen, die ihrerseits eine minimalen Rüstzeit benötigt und demgemäss eine Rundlaufprüfung durch den Werker in kürzester Zeit gewährleistet. Eine weitere Aufgabe der Erfindung ist es ferner, ein Verfahren zum Betreiben einer derartigen Vorrichtung anzugeben.

Die Lösung dieser Aufgabe ergibt sich hinsichtlich der Vorrichtung aus den Merkmalen des Anspruchs 1, sowie bezüglich des Verfahrens aus den Merkmalen des Anspruchs 14. Vorteilhafte Ausgestaltungen und Weiterbildungen der Erfindung sind den Unteransprüchen entnehmbar.

Demnach besteht die erfindungsgemäße Vorrichtung zur Prüfung des Rundlaufes von ringförmigen Werkstücken mit einem Innenkegel und/oder Außenkegel zunächst aus einem in einem Grundrahmen verdrehfest, jedoch axial verschiebbar gelagerten rotationssymmetrisch ausgebildeten Zentrierelement für das ringförmige Werkstück und einer koaxial dazu angeordneten, sowie am Grundrahmen axial fest, jedoch drehbar gelagerten tellerförmigen Werkstückaufnahme. Zudem weist das rotationssymmetrische Zentrierelement einen kegelförmigen Randsteg auf, dessen Kegelmantelfläche zur Kegelmantelfläche des ringförmigen Werkstücks derart korrespondiert, dass infolge axialen Ineinanderführens der beiden zueinander korrespondierenden Kegelmantelflächen zwischen dem Zentrierelement und dem Werkstück ein Formschluss realisierbar ist, und bei der am Zentrierelement wenigstens eine Messeinrichtung zur Rundheitsmessung befestigt ist.

Gemäß einer ersten bevorzugten Ausführungsform der Erfindung ist die tellerförmige Werkstückaufnahme zur Aufnahme eines ringförmigen Werkstücks mit Innenkegel im Durchmesser größer ausgebildet ist als das rotationssymmetrische Zentrierelement, wobei die Messeinrichtung innerhalb des vom ringförmigen Werkstück umschlossenen Raumes am Zentrierelement befestigt ist.

Gemäß einer zweiten bevorzugten Ausführungsform ist vorgesehen, dass die tellerförmige Werkstückaufnahme zur Aufnahme eines Werkstücks mit Außenkegel im Durchmesser kleiner ausgebildet ist als das rotationssymmetrische Zentrierelement, wobei in diesem Fall die Messeinrichtung außerhalb des vom ringförmigen Werkstück umschlossenen Raumes am Zentrierelement befestigt ist.

In besonders vorteilhafter Ausgestaltung der Erfindung ist die Messeinrichtung derart am Zentrierelement befestigt ist, dass deren Messmittel weitestgehend radial auf die zu messende Kegelmantelfläche des ringförmigen Werkstücks weist beziehungsweise geführt ist.

Insoweit kann das Messmittel der Messeinrichtung durch eine Aussparung im Randsteg des Zentrierelements hindurch radial auf die zu messende Kegelmantelfläche des ringförmigen Werkstücks weisen beziehungsweise geführt sein.

In erfinderischer Fortbildung wird des Weiteren vorgeschlagen, dass die Messeinrichtung durch eine berührungsfreie, eine mechanisch abtastende oder eine mechanisch elektronische Messeinrichtung gebildet ist. Als berührungsfreie Messeinrichtung können Laserabtasteinrichtungen oder Kameras, insbesondere CCD-Kameras zur Anwendung kommen.

Weiterhin wird im Sinne der Erfindung vorgeschlagen, dass die tellerförmige Werkstückaufnahme in ihrem Randbereich ein oder mehrere gleichmäßig über den Umfang derselben verteilte Haltelemente zur Festlegung des Werkstücks auf der Oberfläche der Werkstückaufnahme aufweist.

Die Halteelemente können durch Elektro- oder Permanentmagnete und/oder durch eine einen erhöhten Reibschluss zwischen der Oberfläche der Werkstückaufnahme und dem Werkstück realisierende Oberflächenbeschichtung gebildet sein.

Gemäß einer vorteilhaften Weiterbildung ist ferner vorgesehen, dass die axiale Verschiebbarkeit des rotationssymmetrischen Zentrierelements durch einen Linearantrieb realisiert ist, wobei dieser manuell, elektrisch, hydraulisch oder pneumatisch betrieben sein kann. Ebenso ist die drehbar gelagerte tellerförmige Werkstückaufnahme manuell oder mittels eines motorischen Antriebs drehantreibbar.

Schließlich gehört zum Erfindungsumfang, dass die erfindungsgemäße Vorrichtung in unmittelbarer Nähe einer Werkzeugmaschine zur Bearbeitung des besagten ringförmigen Werkstücks angeordnet oder integrierter Bestandteil der betreffenden Werkzeugmaschine ist.

Das Verfahren zum Betreiben einer Vorrichtung zur Prüfung des Rundlaufes von ringförmigen Werkstücken mit einem Innenkegel und/oder Außenkegel zeichnet sich insbesondere durch folgende nacheinander durchzuführende Verfahrensschritte aus:
- ein Prüfling in Form eines ringförmigen Werkstücks wird zunächst derart auf das axial nach oben verschobene beziehungsweise ausgefahrene Zentrierelement verbracht, dass das Werkstück mit seiner Kegelmantelfläche auf der korrespondierenden Kegelmantelfläche des Zentrierelements zum Liegen kommt,
- nachfolgend wird das ringförmige Werkstück durch axiale Verschiebung des Zentrierelements nach unten auf die tellerförmige Werkstückaufnahme abgesetzt und von dieser wieder derart abgehoben, dass infolge Formschluss zwischen den beiden Kegelmantelflächen eine optimale zentrische Positionierung des Werkstücks auf der Kegelmantelfläche des Zentrierelements realisiert wird,
- im Anschluss daran wird das Zentrierelement in seine Ausgangsstellung beziehungsweise eingefahrene Stellung derart zurückgefahren, dass das Werkstück optimal zentriert auf der Werkstückaufnahme zum Liegen kommt,
- schließlich wird eine Relativbewegung zwischen dem Werkstück und der am drehfesten Zentrierelement befestigten Messeinrichtung durch Drehung der Werkstückaufnahme samt Werkstück um die Drehachse der Werkstückaufnahme zur Ermittlung der aktuellen Rundheitstoleranz mittels der genannten Messeinrichtung durchgeführt.

Das Abheben des Werkstücks von der tellerförmigen Werkstückaufnahme durch das Zentrierelement und das nachfolgende erneute Ablegen auf derselben ist wenigstens einmal, vorzugsweise jedoch mehrfach durchzuführen.

Die vorgeschlagene Vorrichtung hat im Hinblick auf herkömmliche Messvorrichtungen den wesentlichen Vorteil, dass ein einzelner Produktionsmitarbeiter die Rundlaufprüfung vor Ort an der Werkzeugmaschine in sekundenschnelle selbst durchführen kann. Bei Feststellung von Überschreitungen der zulässigen Rundheitstoleranz kann der Werker sofort reagieren und eine Korrektur an der Maschine, beziehungsweise an der Werkzeugeinspannung derselben vornehmen, wobei infolge des schnellen Reagierens eine wesentliche Ausschussminimierung zu verzeichnen ist. Es liegt somit ein sofortiges Messergebnis vor, welches in der laufenden Produktion umgehend Berücksichtigung finden kann. Warte- bzw. Stillstandszeiten werden vorteilhaft minimiert bzw. Kontrollstellen müssen nicht gesondert aufgesucht werden. Des Weiteren ist als äußerst vorteilhaft zu verzeichnen, dass der Zentrierkegel des Zentrierelements den größtmöglichen Traganteil des Kegels des Prüflings, beispielsweise eines Synchronringes, erfasst, welcher auch beim Synchronisieren im Getriebe zum Tragen kommt.

Zur Verdeutlichung ist der Beschreibung eine Zeichnung von konkreten Ausführungsformen der Erfindung beigefügt. In dieser zeigen:
- Fig. 1: eine Schnittdarstellung einer erfindungsgemäßen Vorrichtung nach einer ersten Ausführungsform mit einem zentrierten und auf der Werkstückaufnahme abgelegten ringförmigen Werkstück,
- Fig. 2: die Ansicht "A" nach Fig. 1,
- Fig. 3: die Vorrichtung nach Fig. 1 in einem Zustand während des Abhebens eines Prüflings von der Werkstückaufnahme,
- Fig. 4: eine Schnittdarstellung der erfindungsgemäßen Vorrichtung nach einer zweiten Ausführungsform mit einem zentrierten und auf der Werkstückaufnahme abgelegten ringförmigen Werkstück.

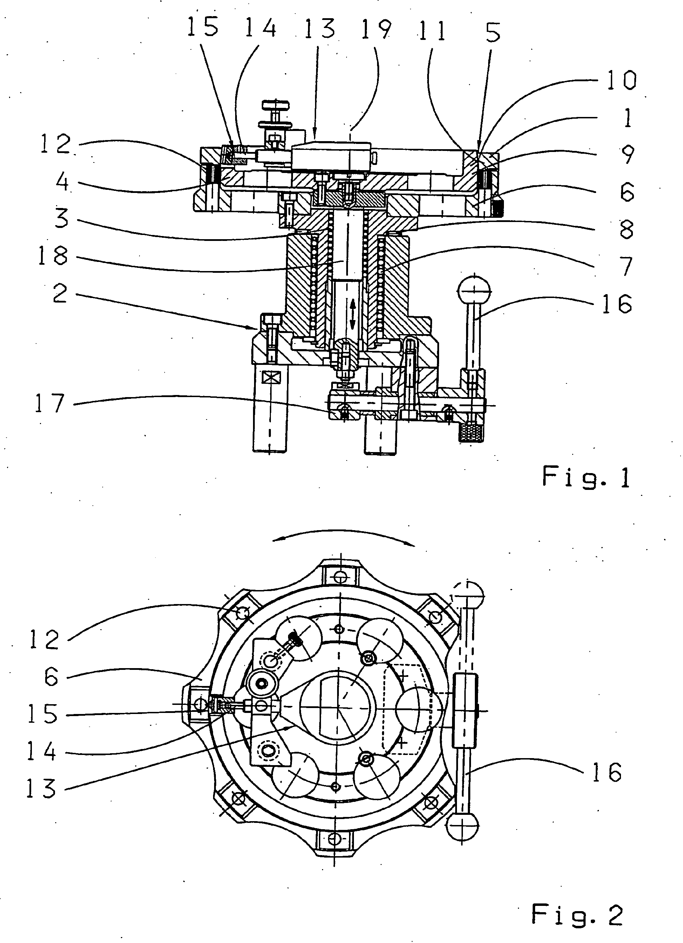

Gemäß Fig. 1 und Fig. 2 besteht die Vorrichtung zur Prüfung des Rundlaufes von ringförmigen Werkstücken 1 aus einem in einem Grundrahmen 2 verdrehfest, jedoch axial verschiebbar in Lagern 3 gelagerten rotationssymmetrisch ausgebildeten Zentrierelement 4 für das ringförmige Werkstück 1, welches vorliegend einen Innenkegel 5 aufweist.

Koaxial zum Zentrierelement 4 ist am besagten Grundrahmen 2 ferner eine tellerförmige Werkstückaufnahme 6 axial fest, jedoch drehbar in den Lagern 7, 8 gelagert.

Das rotationssymmetrisch ausgebildete Zentrierelement 4 weist des Weiteren einen kegelförmigen Randsteg 9 auf, dessen Kegelmantelfläche 10 zur Kegelmantelfläche 11 des ringförmigen Werkstücks 1 derart korrespondiert, dass infolge eines axialen Ineinanderführens der beiden zueinander korrespondierenden Kegelmantelflächen 10, 11 zwischen dem Zentrierelement 4 und dem Werkstück 1 ein Formschluss realisierbar ist, indem der vorliegende Zentrierkegel des Zentrierelementes 4 den größtmöglichen Traganteil des Kegels des Werkstücks 1, beispielsweise eines Synchronringes erfasst, der auch beim Synchronisieren im Getriebe zum Tragen kommt.

Gemäß der vorliegenden Ausführungsform ist die tellerförmige Werkstückaufnahme 6 zur Aufnahme bzw. Auflage des ringförmigen Werkstücks 1 mit einem Innenkegel 5 im zylindrischen Bereich im Durchmesser größer ausgebildet als das rotationssymmetrische Zentrierelement 4, und weist in ihrem Auflagebereich des Werkstücks ein oder mehrere gleichmäßig über den Umfang desselben verteilte Halteelemente 12 zur Festlegung bzw. Fixierung des Werkstücks 1 auf der Oberfläche der Werkstückaufnahme 6 auf.

Vorliegend sind die Haltelemente 12 als Permanentmagnete ausgebildet, jedoch kann es auch angezeigt sein Elektromagnete vorzusehen, um Werkstücke 1 aus einem ferromagnetischen Material auf der planen Oberfläche der Werkstückaufnahme 6 zu fixieren.

Sind Werkstücke 1 aus nicht-ferromagnetischen Werkstoffen auf Rundlauf zu prüfen, können die Halteelemente 12 auch durch eine einen erhöhten Reibschluss zwischen der Oberfläche der Werkstückaufnahme 6 und dem Werkstück 1 realisierende Oberflächenbeschichtung gebildet sein (nicht näher dargestellt).

Wie Fig. 1 und Fig. 2 weiter entnommen werden kann, ist dem Zentrierelement 4 als dem nichtdrehenden Teil der Vorrichtung zum bestimmungsgemäßen Gebrauch derselben wenigstens eine geeignete Messeinrichtung 13 zugeordnet.

Vorliegend ist die Messeinrichtung 13 durch eine an sich bekannte mechanisch abtaste Messeinrichtung 13 in Form einer eine Abstandsmessung durchführenden Messuhr mit einem Messmittel 14 in Form eines stabförmigen Tasters gebildet und innerhalb des vom ringförmigen Werkstück 1 umschlossenen Raumes am Zentrierelement 4 fest jedoch lösbar mittels an sich bekannter mechanischer Befestigungsmittel wie Schrauben befestigt.

Die Befestigung der Messeinrichtung 13 am Zentrierelement 4 ist hierbei so realisiert, dass deren Messmittel 14 radial auf die zu messende Kegelmantelfläche 11 des Werkstücks 1 geführt ist.

Denkbar ist es jedoch auch und wird durch die Erfindung mit erfasst, statt vorstehender rein mechanisch abtastender Messeinrichtung an sich bekannte und demgemäss nicht näher gezeigte mechanisch elektronische und/oder berührungsfreie Messeinrichtungen 13, wie beispielsweise Laserabtasteinrichtungen oder Kameras, insbesondere CCD-Kameras, zur Anwendung zu bringen.

Gemäß Fig. 1 ist das Messmittel 14, nämlich der stabförmige Taster, durch eine Aussparung 15 im Randsteg 9 des Zentrierelements 4 hindurch radial auf die zu messende Kegelmantelfläche 11 des ringförmigen Werkstücks 1 geführt, welches sicherlich leicht nachvollziehbar dann erforderlich ist, wenn das Werkstück 1 das Zentrierelement 4 nicht überragt beziehungsweise die zu prüfende Kegelmantelfläche 11 verdeckt ist.

Insoweit kann es demgemäss auch angezeigt sein, den Randsteg 9 nicht geschlossen, sondern ein- oder mehrfach unterbrochen auszubilden (nicht näher dargestellt).

Nachfolgend wird die Erfindung in ihrer Funktion näher beschrieben.

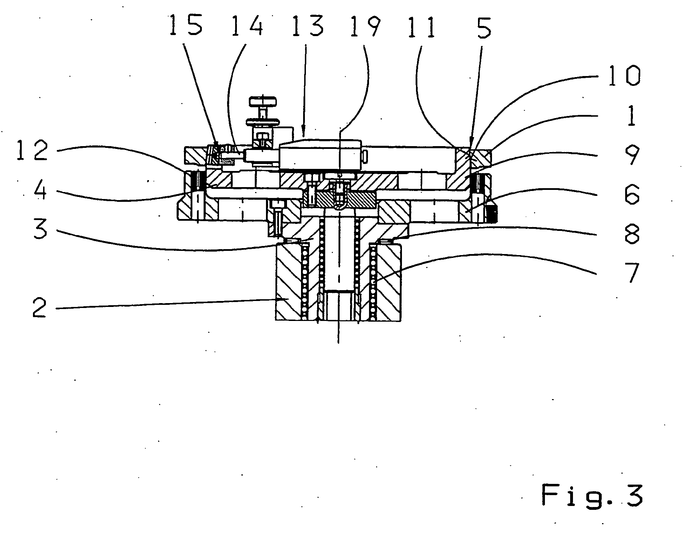

Gesetzt den Fall, ein Prüfling in Form eines ringförmigen Werkstücks 1 mit einem Innenkegel 5 soll während oder nach der mechanischen Bearbeitung mittels einer entsprechenden Werkzeugmaschine auf Rundlauf überprüft werden, so ist das ringförmige Werkstück 1, welches ein Synchronring für ein Getriebe sein kann, zunächst derart auf das axial nach oben verschobene beziehungsweise ausgefahrene Zentrierelement 4 zu verbringen, dass das Werkstück 1 mit seiner Kegelmantelfläche 11 auf der korrespondierenden Kegelmantelfläche 10 des Zentrierelements 4 zum Liegen kommt (Fig. 3).

Nachfolgend wird das ringförmige Werkstück 1 durch axiale Verschiebung des Zentrierelements 4 nach unten auf die tellerförmige Werkstückaufnahme 6 abgesetzt und von dieser wieder derart abgehoben, dass infolge von Formschluss zwischen den beiden zueinander korrespondierenden Kegelmantelflächen 10, 11 des Zentrierelements 4 und des Werkstücks 1 eine optimale zentrische Positionierung des Werkstücks 1 auf der Kegelmantelfläche 10 des Zentrierelements 4 realisiert wird.

Im Anschluss daran wird das Zentrierelement 4 in seine Ausgangsstellung beziehungsweise eingefahrene Stellung zurückgebracht und das Werkstück 1 optimal zentriert auf der Werkstückaufnahme 6 abgesetzt, wo es dann mittels der Halteelemente 12 fixiert wird.

Zur Realisierung der axialen Verschiebbarkeit des Zentrierelements 4 ist bevorzugt ein Linearantrieb vorgesehen, der seinerseits manuell, elektrisch, hydraulisch oder pneumatisch betrieben ist.

Es versteht sich insoweit von selbst, dass die erforderliche Antriebskraft des Linearantriebs so groß zu wählen ist, dass die Anzugskraft gegebenenfalls verwendeter Haltelemente 12 in Form von Permanent- oder auch Elektromagneten überwunden wird.

Vorliegend ist der Linearantrieb durch einen manuell betätigbarer Exzenterhebel 16 gebildet, dessen Exzenter 17 mit einer in den Lagern 3 gelagerten Hubstange 18 des Zentrierelementes 4 wirkverbunden ist.

In durchgeführten Versuchen hat es sich zur Erzielung eines optimalen Zentrierergebnisses als zweckmäßig erwiesen, den Verfahrensschritt des Abhebens und wieder Ablegens des Werkstücks 1 mehrfach durchzuführen. Bezogen auf den hier als Prüfling genutzten Synchronring wurde eine endgültige und zugleich ideale radiale Position des Prüflings zum Zentrierelement 4 bereits nach zweifachem Abheben und wieder Ablegen erzielt.

Ist dieses geschehen, kann die eigentliche Abstandmessung durchgeführt werden, indem eine Relativbewegung zwischen dem Werkstück 1 und der am drehfesten Zentrierelement 4 befestigten Messeinrichtung 13 durch Drehung der Werkstückaufnahme 6 samt Werkstück 1 um die Drehachse 19 der Werkstückaufnahme 6 durchgeführt wird (Fig. 1 und Fig. 2).

Dieses kann vorliegend ebenfalls manuell durch Angreifen am Außenumfang der Werkstückaufnahme 6 oder mittels eines nicht näher dargestellten motorischen Antriebs erfolgen.

Das Ergebnis der Messung der aktuellen Rundheitstoleranz mittels der Messeinrichtung 13 kann optisch (Messuhr), elektronisch und/oder durch ein an sich bekanntes Messprotokoll angezeigt werden.

Ebenso ist eine elektronische Speicherung und Auswertung des Messergebnisses denkbar, wobei das Auswertergebnis gleichzeitig zur Einstellung der Werkzeugmaschine beziehungsweise dessen Werkzeugs dienen kann.

Im Hinblick darauf erscheint es besonders vorteilhaft, die erfindungsgemäße Vorrichtung in unmittelbarer Nähe einer betreffenden Werkzeugmaschine zur Bearbeitung des ringförmigen Werkstücks 1 anzuordnen oder dieselbe als integrierten Bestandteil der Werkzeugmaschine auszubilden (nicht näher dargestellt).

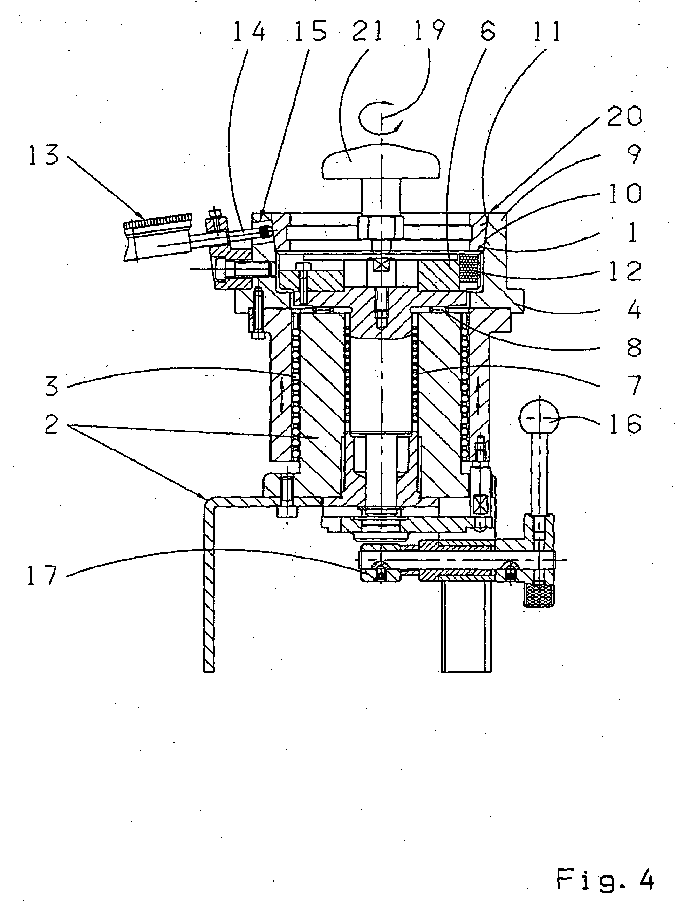

Die Ausführungsform der erfindungsgemäßen Vorrichtung nach Fig. 4 unterscheidet sich zu vorstehender im wesentlichen dahingehend, dass diese für ringförmige Werkstücke 1 mit einem Außenkegel 20 ausgebildet ist.

Insoweit ist die tellerförmige Werkstückaufnahme 6 zur Aufnahme des Werkstücks 1 im Durchmesser kleiner ausgebildet als das Zentrierelement 4, dass heißt, dass das Zentrierelement 4 und Werkstückaufnahme 6 in ihrer Anordnung innerhalb der Vorrichtung vertauscht sind.

Des Weiteren greift der Exzenterhebel 16 nicht mehr in der Mittenachse bzw. Drehachse 19 sondern im Bereich des Außenumfangs der Vorrichtung am Zentrierelement 4 an.

Ebenso ist nunmehr die Messeinrichtung 13, hier in Form einer Messuhr, außerhalb des ringförmigen Werkstücks 1 angeordnet und am Zentrierelement 4 befestigt, wobei das Messmittel 14 in Form des stabförmigen Tasters durch die Aussparung 15 im kegelförmigen Randsteg 9 des Zentrierelements 4 hindurch exakt senkrecht auf die Kegelmantelfläche 11 des Werkstücks 1 geführt ist.

Zur Durchführung der eigentlichen Abstandsmessung (Rundlauf), wird gemäß diesem Ausführungsbeispiel die Relativbewegung zwischen dem Werkstück 1 und der am drehfesten Zentrierelement 4 befestigten Messeinrichtung 13 durch Drehung der Werkstückaufnahme 6 samt Werkstück 1 um die Drehachse 19 der Werkstückaufnahme 6 manuell durchgeführt, indem seitens des Produktionsmitarbeiters an einem in der Drehachse 19 der Werkstückaufnahme 6 mit derselben drehfest verbundenen Drehgriff 21 angegriffen wird.

### Bezugszeichen

- 1: Ringförmiges Werkstück
- 2: Grundrahmen
- 3: Lager (Zentrierelement 4)
- 4: Zentrierelement
- 5: Innenkegel (Werkstück 1)
- 6: Werkstückaufnahme
- 7: Lager (Werkstückaufnahme 6)
- 8: Lager (Werkstückaufnahme 6)
- 9: Randsteg
- 10: Kegelmantelfläche (Zentrierelement 4)
- 11: Kegelmantelfläche (Werkstück 1)
- 12: Haltelemente
- 13: Messeinrichtung
- 14: Messmittel
- 15: Aussparung
- 16: Exzenterhebel
- 17: Exzenter
- 18: Hubstange
- 19: Drehachse
- 20: Außenkegel (Werkstück 1)
- 21: Drehgriff

## Patentansprüche

1. Vorrichtung zur Prüfung des Rundlaufes von ringförmigen Werkstücken (1) mit einem Innenkegel (5) und/oder Außenkegel (20), **gekennzeichnet durch** ein in einem Grundrahmen (2) verdrehfest, jedoch axial verschiebbar gelagertes rotationssymmetrisch ausgebildetes Zentrierelement (4) für das ringförmige Werkstück (1) und eine koaxial dazu angeordnete sowie am Grundrahmen (2) axial fest, jedoch drehbar gelagerte tellerförmige Werkstückaufnahme (6), wobei das rotationssymmetrische Zentrierelement (4) einen kegelförmigen Randsteg (9) aufweist, dessen Kegelmantelfläche (10) zur Kegelmantelfläche (11) des ringförmigen Werkstücks (1) derart korespendiert, dass infolge eines axialen Ineinanderführens der beiden zueinander korrespondierenden Kegelmantelflächen (10, 11) zwischen dem Zentrierelement (4) und dem Werkstück (1) ein Formschluss realisierbar ist, und bei der am Zentrierelement (4) wenigstens eine Messeinrichtung (13) befestigt ist.

2. Vorrichtung nach Anspruch 1, **dadurch gekennzeichnet, dass** die tellerförmige Werkstückaufnahme (6) zur Aufnahme eines ringförmigen Werkstücks (1) mit Innenkegel (5) im Durchmesser größer ausgebildet ist als das rotationssymmetrische Zentrierelement (4) und die Messeinrichtung (13) innerhalb des vom ringförmigen Werkstück (1) umschlossenen Raumes am Zentrierelement (4) befestigt ist.

3. Vorrichtung nach Anspruch 1, **dadurch gekennzeichnet, dass** die tellerförmige Werkstückaufnahme (6) zur Aufnahme eines Werkstücks (1) mit Außenkegel (20) im Durchmesser kleiner ausgebildet ist als das rotationssymmetrische Zentrierelement (4) und die Messeinrichtung (13) außerhalb des vom ringförmigen Werkstück (1) umschlossenen Raumes am Zentrierelement (4) befestigt ist.

4. Vorrichtung nach einem der Ansprüche 1 bis 3, **dadurch gekennzeichnet, dass** die Messeinrichtung (13) derart am Zentrierelement (4) befestigt ist, dass deren Messmittel (14) weitestgehend radial auf die zu messende Kegelmantelfläche (11) des ringförmigen Werkstücks (1) weist oder geführt ist.

5. Vorrichtung nach Anspruch 4, **dadurch gekennzeichnet, dass** das Messmittel (14) der Messeinrichtung (13) durch eine Aussparung (15) im Randsteg (9) des Zentrierelements (4) hindurch radial auf die zu messende Kegelmantelfläche (11) des ringförmigen Werkstücks (1) weist beziehungsweise geführt ist.

6. Vorrichtung nach einem der Ansprüche 1 bis 5, **dadurch gekennzeichnet, dass** die Messeinrichtung (13) durch eine berührungsfreie, eine mechanisch abtastende oder eine mechanisch elektronische Messeinrichtung (13) gebildet ist.

7. Vorrichtung nach Anspruch 6, **dadurch gekennzeichnet, dass** die berührungsfreie Messeinrichtung (13) als Laserabtasteinrichtung oder Kamera, insbesondere CCD-Kamera, ausgebildet ist.

8. Vorrichtung nach einem der Ansprüche 1 bis 7, **dadurch gekennzeichnet, dass** die tellerförmige Werkstückaufnahme (6) in ihrem Randbereich ein oder mehrere gleichmäßig über den Umfang derselben verteilte Haltelemente (12) zur Festlegung des Werkstücks (1) auf der Oberfläche der Werkstückaufnahme (6) aufweist.

9. Vorrichtung nach Anspruch 8, **dadurch gekennzeichnet, dass** die Halteelemente (12) durch Elektro- oder Permanentmagnete und/oder durch eine einen erhöhten Reibschluss zwischen der Oberfläche der Werkstückaufnahme (6) und dem Werkstück (1) realisierende Oberflächenbeschichtung gebildet sind.

10. Vorrichtung nach einem der Ansprüche 1 bis 9, **dadurch gekennzeichnet, dass** die axiale Verschiebbarkeit des rotationssymmetrischen Zentrierelements (4) mittels eines Linearantriebs bewerkstelligt ist.

11. Vorrichtung nach Anspruch 10, **dadurch gekennzeichnet, dass** der Linearantrieb manuell, elektrisch, hydraulisch oder pneumatisch betrieben ist.

12. Vorrichtung nach einem der Ansprüche 1 bis 11, **dadurch gekennzeichnet, dass** die drehbar gelagerte tellerförmige Werkstückaufnahme (6) manuell oder mittels eines motorischen Antriebs drehantreibbar ist.

13. Vorrichtung nach einem der Ansprüche 1 bis 12, **dadurch gekennzeichnet, dass** dieselbe in unmittelbarer Nähe einer Werkzeugmaschine zur Bearbeitung des besagten ringförmigen Werkstücks (1) angeordnet oder integrierter Bestandteil der betreffenden Werkzeugmaschine ist.

14. Verfahren zum Betreiben einer Vorrichtung zur Prüfung des Rundlaufes von ringförmigen Werkstücken (1) mit einem Innenkegel (5) und/oder Außenkegel (20) nach einem der Ansprüche 1 bis 13,
**dadurch gekennzeichnet,**
**dass** ein Prüfling in Form eines ringförmigen Werkstücks (1) zunächst derart auf das axial nach oben verschobene beziehungsweise ausgefahrene Zentrierelement (4) verbracht wird, dass das Werkstück (1) mit seiner Kegelmantelfläche (11) auf der korrespondierenden Kegelmantelfläche (10) des Zentrierelements (4) zum Liegen kommt, nachfolgend das ringförmige Werkstück (1) durch axiale Verschiebung des Zentrierelements (4) nach unten auf die tellerförmige Werkstückaufnahme (6) abgesetzt und von dieser wieder abgehoben wird derart, dass infolge Formschluss zwischen den beiden Kegelmantelflächen (10, 11) eine optimale zentrische Positionierung des Werkstücks (1) auf der Kegelmantelfläche (10) des Zentrierelements (4) realisiert wird, im Anschluss daran das Zentrierelement (4) in seine Ausgangsstellung beziehungsweise eingefahrene Stellung derart zurückgefahren wird, dass das Werkstück (1) optimal zentriert auf der Werkstückaufnahme (6) zum Liegen kommt und schließlich eine Relativbewegung zwischen dem Werkstück (1) und der am drehfesten Zentrierelement (4) befestigten Messeinrichtung (13) durch Drehung der Werkstückaufnahme (6) samt Werkstück (1) um die Drehachse (19) der Werkstückaufnahme (6) zur Ermittlung der aktuellen Rundheitstoleranz mittels der Messeinrichtung (13) durchgeführt wird.

15. Verfahren nach Anspruch 14, **dadurch gekennzeichnet, dass** das Abheben des Werkstücks (1) von der tellerförmigen Werkstückaufnahme (6) mittels des Zentrierelementes (4) und nachfolgendes wieder Ablegen auf derselben wenigstens einmal, vorzugsweise jedoch mehrfach durchgeführt wird.

## Claims

1. The invention relates to a device for checking the concentricity of ring-shaped workpieces (1) with an inner cone (5) and/or an outer cone (20), **characterized in that** a base frame (2) supports a torsion-proof but axially displaceable, rotationally symmetrical centering element (4) for the ring-shaped workpiece (1), and coaxially arranged to it a bearing-supported disk-shaped workpiece receiver (6), which is axially fixed to the base frame (2), with the rotationally symmetrical centering element (4) featuring a cone-shaped border wall (9) whose envelope-of-cone surface area (10) corresponds to the envelope-of-cone surface area (11) of the ring-shaped workpiece (1) in such a way that axial mating of the two corresponding envelope-of-cone surfaces (10, 11) between the centering element (4) and the workpiece (1) permits positive engagement, and with the centering element (4) having at least one measuring device (13) mounted to it.

2. A device according to claim 1, **characterized in that** the disk-shaped workpiece receiver (6) for the mounting of a ring-shaped workpiece (1) with inner cone (5) has a lager diameter than the rotationally symmetrical centering element (4), and that the measuring device (13) is mounted to the centering element (4) within the space embraced by the ring-shaped workpiece (1).

3. A device according to claim 1, **characterized in that** the disk-shaped workpiece receiver (6) for the mounting of a workpiece (1) with outer cone (20) has a smaller diameter than the rotationally symmetrical centering element (4), and that the measuring device (13) is mounted to the centering element (4) outside the space embraced by the ring-shaped workpiece (1).

4. A device according to one of the claims 1 through 3, **characterized in that** the measuring device (13) is mounted to the centering element (4) in such a way that the measuring means (14) are largely radially orientated towards the envelope-of-cone surface (11) of the ring-shaped workpiece (1).

5. A device according to claim 4, **characterized in that** the measuring means (14) of the measuring device (13) are routed through a recess (15) in the border wall (9) of the centering element (4) and orientated radially towards the envelope-of-cone surface (11) of the ring-shaped workpiece (1).

6. A device according to one of the claims 1 through 5, **characterized in that** the measuring device (13) is a noncontact, a mechanically callipering, or a mechanical-electronic measuring device (13).

7. A device according to claim 6, **characterized in that** the noncontact measuring device (13) is realized in the form of a laser-scanning device or a camera, especially a CCD camera.

8. A device according to one of the claims 1 through 7, **characterized in that** the border area of the disk-shaped workpiece receiver (6) features one or several holding elements (12) uniformly distributed on its circumference for fixing the workpiece (1) to the surface of the workpiece receiver (6).

9. A device according to claim 8, **characterized in that** the holding elements (12) are realized in the form of solenoids or permanent magnets and/or in the form of a surface coating producing increased frictional resistance between the surface of the workpiece receiver (6) and the workpiece (1).

10. A device according to one of the claims 1 through 9, **characterized in that** axial displaceability of the rotationally symmetrical centering element (4) is realized by means of a linear drive.

11. A device according to claim 10, **characterized in that** the linear drive is operated manually, electrically, hydraulically, or pneumatically.

12. A device according to one of the claims 1 through 11, **characterized in that** rotary drive of the bearing-supported disk-shaped workpiece receiver (6) can be realized manually or by means of a motor drive.

13. A device according to one of the claims 1 through 12, **characterized in that** it is arranged in the immediate neighborhood of a machine tool for the machining of said ring-shaped workpiece (1) or that it is an integral part of the machine tool.

14. A method for operating a device for checking the concentricity of ring-shaped workpieces (1) with an inner cone (5) and/or an outer cone (20) according to one of the claims 1 through 13, **characterized in that** a test piece in the form of a ring-shaped workpiece (1) is first placed in such a way on the axially upward displaced or extended centering element (4) that the envelope-of-cone surface (11) of the workpiece (1) rests on the corresponding envelope-of-cone surface (10) of the centering element (4), and that by means of axial displacement of the centering element (4), the ring-shaped workpiece (1) is subsequently moved downward to be placed on the disk-shaped workpiece receiver (6) before it is removed from it again in such a way that positive engagement between the two envelope-of-cone surfaces (10, 11) brings about optimal centric positioning of the workpiece (1) on the envelope-of-cone surface (10) of the centering element (4), upon which the centering element (4) is returned to its original or retracted position in such a way that the workpiece (1) is optimally centered on the workpiece receiver (6), and that finally by tuming the workpiece receiver (6) including the workpiece (1) around the axis of rotation (19) of the workpiece receiver (6), a relative motion is performed between the workpiece (1) and the measuring device (13) mounted on the torsion-proof centering element (4) in order to determine the current roundness tolerance by means of the measuring device (13).

15. A method according to claim 14, **characterized in that** removal of the workpiece (1) from the disk-shaped workpiece receiver (6) by means of the centering element (4) and subsequent re-placement on the workpiece receiver (6) is performed at least once, with multiple performance being preferred.

## Revendications

1. Dispositif pour le contrôle de la concentricité de pièces annulaires (1) à cône intérieur (5) et/ou à cône extérieur (20), **caractérisé par** un élément de centrage (4) pour la pièce annulaire (1), qui est symétrique de révolution, bloqué en rotation mais mobile en translation axiale dans un châssis de base (2), et un logement de pièce (6) en forme de plateau, disposé coaxialement à cet élément et monté bloqué dans la direction axiale mais mobile en rotation sur le châssis de base (2), l'élément de centrage symétrique de révolution (4) comportant une nervure marginale conique (9) dont la surface de paroi conique (10) correspond à la surface de paroi conique (11) de la pièce annulaire (1) de sorte que, à la suite de la pénétration axiale mutuelle des deux surfaces de paroi conique (10, 11) qui se correspondent mutuellement, il est possible de réaliser une liaison par complémentarité de forme entre l'élément de centrage (4) et la pièce (1), et par au moins un dispositif de mesure (13) est fixé à l'élément de centrage (4).

2. Dispositif selon la revendication 1, **caractérisé en ce que** le logement de pièce (6) en forme de plateau destiné à loger une pièce annulaire (1) à cône intérieur (5) est plus grand en diamètre que l'élément de centrage symétrique de révolution (4) et le dispositif de mesure (13) est fixé à l'élément de centrage (4) à l'intérieur de l'espace entouré par la pièce annulaire (1).

3. Dispositif selon la revendication 1, **caractérisé en ce que** le logement de pièce (6) en forme de plateau destiné à loger une pièce (1) à cône extérieur (20) est plus petit en diamètre que l'élément de centrage symétrique de révolution (4) et le dispositif de mesure (13) est fixé à l'élément de centrage (4) à l'extérieur de l'espace entouré par la pièce annulaire (1).

4. Dispositif selon l'une des revendications 1 à 3, **caractérisé en ce que** le dispositif de mesure (13) est fixé à l'élément de centrage (4) de telle manière que le moyen de mesure (14) de ce dispositif pointe ou est dirigé dans une très large mesure radialement vers la surface de paroi conique (11) de la pièce annulaire (1) qu'il s'agit de mesurer.

5. Dispositif selon la revendication 4, **caractérisé en ce que** le moyen de mesure (14) du dispositif de mesure (13) pointe ou est dirigé au travers d'un évidement (15) du collet marginal (9) de l'élément de centrage (4), radialement vers la surface de paroi conique (11) de la pièce annulaire (1) qu'il s'agit de mesurer.

6. Dispositif selon l'une des revendications 1 à 5, **caractérisé en ce que** le dispositif de mesure (13) est formé par un dispositif de mesure sans contact physique ou à palpation mécanique ou de nature mécanique-électronique (13).

7. Dispositif selon la revendication 6, **caractérisé en ce que** le dispositif de mesure sans contact physique (13) est constitué par un dispositif palpeur à laser ou par un appareil de photographie, en particulier un appareil de photographie à CCD.

8. Dispositif selon l'une des revendications 1 à 7, **caractérisé en ce que** le logement de pièce (6) en forme de plateau comporte, dans sa région marginale, un ou plusieurs éléments de retenue (12) pour fixer la pièce (1) sur la surface du logement de pièce (6) qui sont répartis régulièrement sur la circonférence.

9. Dispositif selon la revendication 8, **caractérisé en ce que** les éléments de retenue (12) sont constitués par des électro-aimants ou des aimants permanents et/ou par un revêtement superficiel qui réalise une liaison par friction renforcée entre la surface du logement de pièce (6) et la pièce (1).

10. Dispositif selon l'une des revendications 1 à 9, **caractérisé en ce que** la mobilité en translation axiale de l'élément de centrage symétrique de révolution (4) est réalisée au moyen d'un entraînement linéaire.

11. Dispositif selon la revendication 10, **caractérisé en ce que** l'entraînement linéaire est actionné manuellement, électriquement, hydrauliquement ou pneumatiquement.

12. Dispositif selon l'une des revendications 1 à 11, **caractérisé en ce que** le logement de pièce en forme de plateau (6) monté rotatif peut être entraîné en rotation manuellement ou au moyen d'un entraînement à moteur.

13. Dispositif selon l'une des revendications 1 à 12, **caractérisé en ce qu'**il est disposé à proximité immédiate d'une machine-outil pour l'usinage de ladite pièce annulaire (1) ou est une partie constitutive intégrée de la machine-outil considérée.

14. Procédé pour faire fonctionner un dispositif pour le contrôle de la concentricité de pièces annulaires (1) à cône intérieur (5) et/ou à cône extérieur (20) selon l'une des revendications 1 à 13,
**caractérisé**
**en ce qu'**un spécimen constitué par une pièce annulaire (1) est initialement transféré sur l'élément de centrage (4) qui a été repoussé axialement vers le haut ou sorti de telle manière que la pièce (1) vienne reposer par sa surface de paroi conique (11) sur la surface de paroi conique correspondante (10) de l'élément de centrage (4), puis la pièce annulaire (1) est abaissée par une translation axiale de l'élément de centrage (4) sur le logement de pièce (6) en forme de plateau et de nouveau soulevée par rapport à ce logement, de sorte que, sous l'effet de la liaison par complémentarité de forme entre les deux surfaces de parois coniques (10, 11), un positionnement centré optimal de la pièce (1) sur la surface de paroi conique (10) de l'élément de centrage est réalisé, à la suite de quoi l'élément de centrage (4) est ramené à sa position de départ ou position rentrée de sorte que la pièce (1) vient reposer sur le logement de pièce (6) dans une position centrée de façon optimale et, finalement, un mouvement relatif est réalisé entre la pièce (1) et le dispositif de mesure (13) fixé à l'élément de centrage (4) bloqué en rotation, par une rotation du logement de pièce (6) et de la pièce (1), autour de l'axe de rotation (19) du logement de pièce (6) pour déterminer la tolérance de concentricité actuelle au moyen du dispositif de mesure (13).

15. Procédé selon la revendication 14, **caractérisé en ce que** le soulèvement de la pièce (1) par rapport au logement de pièce (6) en forme de plateau est exécuté au moyen de l'élément de centrage (4) et sa nouvelle dépose consécutive sur ce logement sont exécutés au moins une fois, mais de préférence plusieurs fois.
